**Europäisches Patentamt**

**European Patent Office**

**Office européen des brevets**

(11) Veröffentlichungsnummer: **0 319 812**
**A1**

## (12) EUROPÄISCHE PATENTANMELDUNG

(21) Anmeldenummer: **88119764.4**

(22) Anmeldetag: **26.11.88**

(51) Int. Cl.⁴: **F16B 25/10 , E06B 1/60 , E04F 13/08**

(30) Priorität: **28.11.87 DE 3740460**
**08.04.88 DE 8804654 U**

(43) Veröffentlichungstag der Anmeldung:
**14.06.89 Patentblatt 89/24**

(84) Benannte Vertragsstaaten:
**AT BE CH DE ES FR GB GR IT LI LU NL SE**

(71) Anmelder: **Adolf Würth GmbH & Co. KG**
**Maienweg 10 .**
**D-7118 Künzelsau(DE)**

(72) Erfinder: **Weidner, Karl**
**Worgberg 14**
**D-7118 Ingelfingen(DE)**

(74) Vertreter: **Patentanwälte RUFF, BEIER und**
**SCHÖNDORF**
**Neckarstrasse 50**
**D-7000 Stuttgart 1(DE)**

(54) **Selbstbohrende Schraube.**

(57) Eine Schraube zur Abstandsbefestigung von Verschalungen o. dgl. (21) mit Abstand vor einer Unterlage (22) enthält zwei Gewinde (16, 19) gleichen Außendurchmessers und gleicher Steigung, die durch einen gewindefreien Abschnitt (17) voneinander getrennt sind. Der eine Gewindeabschnitt (15) geht von der Spitze (12) der Schraube aus, der zweite Gewindeabschnitt (18) reicht bis unmittelbar an den Schraubenkopf (14) heran. Eine Phasenverschiebung zwischen den beiden gewinden (16, 19) ist möglich und zulässig.

Die Länge des dem Schraubenkopf (14) zugewandten Gewindeabschnittes (18) ist unabhängig von der Länge der Schraube. Diese Länge wird nur von der üblichen Dicke von den zu befestigenden Verschalungen o.dgl. bestimmt.

EP 0 319 812 A1

## Selbstbohrende Schraube

Die Erfindung betrifft eine selbstbohrende Schraube mit einem ein Betätigungsende und eine Schraubspitze aufweisenden Schraubenschaft, der mindestens zwei Gewindeabschnitte aufweist, von denen der eine Gewindeabschnitt von der Schraubspitze ausgeht.

Es ist bereits eine Schraube dieser Art bekannt. Sie weist zwei Abschnitte unterschiedlichen Durchmessers auf, wobei beide Gewinde als Holzgewinde ausgebildet sind. Mit dieser Art von Schrauben können Verschalungskonstruktionen o. dgl. mit Abstand an Unterlagen oder Tragwerk befestigt werden. Voraussetzung ist allerdings, daß die mit Abstand zu befestigende Konstruktion bereits fixiert ist. Bei dieser bekannten Schraube muß die zu befestigende Konstruktion vorgebohrt werden. Dies bedeutet zusätzliche Arbeitsschrit te, die zu einer Verteuerung der derartigen Befestigung führen.

Ebenfalls bekannt zur Befestigung von Lattenkonstruktionen o. dgl. mit Abstand vor einem Trageelement sind Schrauben, bei denen der Schraubenkopf auf irgend eine Weise mit der zu befestigenden Konstruktion verbunden wird, so daß durch Vorund Rückdrehen der Befestigungsschraube eine Justierung erfolgen kann. Hierbei gibt es bereits Schrauben, bei denen unmittelbar hinter dem Kopf eine drehbare Hülse angebracht ist (DE-OS 35 40 413) oder solche Schrauben, bei denen der Schraubenschaft hinter dem Kopf ein Gewinde ohne Steigung aufweist, das durch mehrere umlaufende Rippen gebildet wird. Bei diesen sogenannten justierbaren Abstandsschrauben wird in ein vorgebohrtes Loch der zu befestigenden Konstruktion die Schraube eingesetzt und in die Unterkonstruktion eingeschraubt. Durch die entstehende Kraft in axialer Richtung wird die Hülse oder die Verrippung des Schraubenschaftes in das Loch in der zu befestigenden Konstruktion eingezogen. Sobald die Schraube in der Konstruktion tief genug eingezogen ist, daß sie nicht mehr über die Oberseite vorsteht, kann durch Linksdrehen der Schrauben die Konstruktion von der Unterlage entfernt und soweit weg bewegt werden, bis sie in der gewünschten Position ist. Damit läßt sich bereits eine ohne zusätzliche Hilfsmittel durchzuführende Justierung allein mit der Befestigungsschraube erreichen. Bei großflächigen oder langen zu befestigenden Konstruktionen müssen jedoch an allen Stellen, an denen eine Schraube sitzen soll, derartige justierbare Abstandsschrauben eingeschraubt werden, und erst nach Einschrauben aller Schrauben kann die Justierung erfolgen. Stellt sich beispielsweise später heraus, daß es aus Festigkeitsgründen gewünscht ist, den Zwischenraum zwischen zwei Schrauben noch zu unterstützen, so ist dies mit derartigen justierbaren Schrauben nicht mehr möglich, da das Einschrauben zu einer Beaufschlagung des Elementes in Richtung auf den Untergrund führt.

Der Erfindung liegt die Aufgabe zugrunde, eine selbstbohrende Schraube zu schaffen, die bei einfachem Aufbau und kostengünstiger Herstellung es möglich macht, sehr schnell und einfach ein auf das gewünschte Maß in der richtigen Stellung gebrachtes Rahmenelement o. dgl. an einer Unterlage mit Abstand zu befestigen, ohne daß bei der Befestigung eine Verspannung oder sonstige Beaufschlagung des Elementes in Richtung auf die Unterlage hin erfolgt. Die Montage soll also ohne zusätzliche Hilfsmittel durchführbar sein. Unter selbstbohrender Schraube ist eine Schraube zu verstehen, die ein Holzgewinde oder ein ähnliches Gewinde aufweist, die also unter gewissem Druck sich selbst in Holz oder ein ähnliches Material einschraubt.

Zur Lösung dieser Aufgabe schlägt die Erfindung eine Schrauben vor, bei der ein Gewindeabschnitt bis an das Betätigungsende der Schraube heranreicht und beide Gewindeabschnitte gleiche Steigung und gleichen Außendurchmesser aufweisen. Dadurch, daß beide Gewinde den gleichen Außendurchmesser aufweisen, wird ein zusätzliches Vorbohren der zu befestigenden Rahmenkonstruktion vermieden. Wenn die Schraube einen üblichen Durchmesser von beispielsweise 6 mm hat, also einen Dünnschaft, so ist es in vielen Fällen möglich, die Schraube direkt in das Holz des Rahmens oder einer sonstigen mit Abstand zu befestigenden Konstruktion einzuschrauben, ohne daß es einer Vorbohrung bedarf. Sollte aber unter Umständen eine Vorbohrung erforderlich sein, so kann diese Vorbohrung sowohl für den zu befestigenden Rahmen als auch für die Unterlage erfolgen, da die Schraube überall im wesentlichen den gleichen Durchmesser aufweist. Dadurch, daß beide Gewindeabschnitte, d. h. sowohl der Gewindeab schnitt im Bereich der Bohrspitze als auch der Gewindeabschnitt im Bereich des Betätigungsendes die gleiche Steigung aufweisen, erfolgt der Vorschub der Schraube sowohl durch die zu befestigende Konstruktion als auch in die Unterlage mit gleicher Geschwindigkeit, so daß keine Kraft auf die zu befestigende Konstruktion in Richtung auf die Unterlage oder von dieser weg ausgeübt wird. Die Konstruktion wird vielmehr in ihrer Stellung gehalten und fixiert, trotz des Abstandes zwischen der Konstruktion und der Unterlage, allein aufgrund des Gewindes im Bereich des Betätigungsendes der Schraube. Es wird also eine spannungsfreie Abstandsmontage erreicht.

Insbesondere kann vorgesehen sein, daß das Betätigungsende einen Schraubenkopf, vorzugsweise einen Senkkopf, aufweist. Dieser wird in das Holz der zu befestigenden Konstruktion hineingezogen, obwohl keine Kraft auf die Konstruktion als solche ausgeübt wird. Zur Verbesserung des Eindringens kann der Schraubenkopf auf seiner Unterseite, Verrippungen, Schneidkanten o. dgl. aufweisen.

In Weiterbildung der Erfindung kann vorgesehen sein, daß beide Gewindeabschnitte durch einen gewindefreien Abschnitt voneinander getrennt sind, dessen Länge vorzugsweise mindestens 2 mm beträgt.

In Weiterbildung der Erfindung kann vorgesehen sein, daß beide Gewindeabschnitte gegeneinander phasenversetzt sind, so daß also die Gewindewendel des einen Abschnittes nicht eine geometrische Fortsetzung der Gewindewendel des anderen Abschnittes ist.

In Weiterbildung kann vorgesehen sein, daß der gewindefreie Abschnitt etwa zylindrisch ausgebildet ist. Sein Durchmesser kann vorzugsweise größer sein als der Kerndurchmesser der Gewindeabschnitte. Dagegen ist mit Vorteil der Spitzendurchmesser des Gewindes größer als der Durchmesser des gewindefreien Abschnittes. Insbesondere entspricht der Durchmesser des gewindefreien Abschnitts dem Flankendurchmesser der Gewindeabschnitte. In Weiterbildung der Erfindung kann vorgesehen sein, daß der dem Betätigungsende der Schraube zugeordnete Gewindeabschnitt eine von der Gesamtschraubenlänge unabhängige axiale Länge aufweist. Die axiale Länge des Schraubenkopfgewindeabschnittes wird mit Vorteil so gewählt, daß sie der üblichen Dicke der zu befestigenden Konstruktionen in etwa gleich ist. Dies bedeutet, daß bei Schrauben, die zur Befestigung von Fenster- oder Türrahmen vorgesehen sind, die axiale Länge des Schraubenkopfgewindeabschnittes etwa 50 mm beträgt, da Fenster- und Türrahmen eine übliche Dicke dieser Größenordnung aufweisen.

Wird die Schraube dagegen zur Befestigung von Verschalungen, Plattenkonstruktionen o. dgl. verwendet, so beträgt die axiale Länge des Schraubenkopfgewindeabschnittes entsprechend der üblichen Dicke derartiger Konstruktionen etwa 25 mm.

Während die axiale Länge des dem Schraubenkopf zugewandten Gewindeabschnittes von der Gesamtlänge der Schraube unabhängig ist, schlägt die Erfindung vor, daß in Weiterbildung die axiale Länge des der Schraubenspitze zugewandten Gewindeabschnittes von der Gesamtlänge der Schraube abhängig ist, mindestens im gewissem Maß.

In Weiterbildung der Erfindung kann vorgesehen sein, daß der gewindefreie Abschnitt eine von der Länge der Schraube abhängige Länge aufweist.

Soll die Schraube bei einer relativ harten Unterlage verwendet werden, schlägt die Erfindung in Weiterbildung vor, daß im wesentlichen jede Windung des von der Spitze ausgehenden Gewindeabschnittes eine Kerbe aufweist. Durch das Vorsehen der Kerben wird in den Gewindegängen des vorderen von der Spitze ausgehenden Gewindeabschnittes jeweils eine Schneidkante gebildet, die ein Eindrehen der Schraube auch in relativ hartes Material ermöglicht.

In Weiterbildung der Erfindung kann vorgesehen sein, daß die Kerbe bis auf den Kerndurchmesser des Gewindeschaftes herabreicht. Dadurch wird insbesondere dafür gesorgt, daß ausreichend Platz zum Herausfördern der Späne zur Verfügung steht.

In Weiterbildung der Erfindung kann vorgesehen sein, daß die Kerben auf einer Linie liegen, die von einer geraden abweicht. Dadurch ergibt sich ebenfalls eine bessere Wirkung beim Eindrehen der Schraube und beim Herausfördern der Späne.

Insbesondere kann vorgesehen sein, daß die die Kerben verbindende Linie leicht schraubenlinienförmig verläuft. Sie weicht dabei nur wenig von einer geraden Linie ab. So kann beispielsweise vorgesehen sein, daß die die Kerbe verbindende Linie sich über einen Winkel von mehr als etwa 180°, insbesondere über einen Winkel von etwa 270° erstreckt. Dies bedeutet, daß die Schraubenlinie, auf der die die Kerben verbindende Linie liegt, sich um etwa drei Viertel eines Umfangs erstreckt.

In Weiterbildung der Erfindung kann vorgesehen sein, daß die die Kerben verbindende Linie ein von dem Gewindesinn des Gewindeabschnitts abweichendes Gewinde bildet. Üblicherweise haben Schrauben ein Rechtsgewinde. In diesem Fall liegt die die Kerben verbindende Linie also auf einem Linksgewinde.

In Weiterbildung kann vorgesehen sein, daß die Seitenwände der Kerben eben sind. Auf diese Weise wird an dem Schnitt zwischen den Kerben und der Außenseite der Gewindegänge eine relativ scharfe Kante gebildet. Insbesondere ist es günstig, wenn jede Kerbe sich nach außen erweitert. Durch diese Art der Erweiterung kann der Schneidwinkel zwischen den Gewindegängen und den Seitenflächen der Kerben günstig ausgewählt werden.

So ist es beispielsweise besonders günstig, wenn, wie von der Erfindung ebenfalls vorgeschlagen, die Seitenwände der Kerben stärker geneigt sind als es einem Radius entspricht.

Die Erfindung schlägt ebenfalls die Verwendung einer beschriebenen Schraube als Schraube zur Befestigung von Verschalungen, Platten- oder Rahmenkonstruktionen o. dgl. aus Holz oder Kunststoff mit Abstand vor einer Unterlage vor. Diese Schraube kann in allen Fällen Verwendung finden, in denen für die Unterlage kein Dübel erforderlich ist, sondern die Schraube direkt in die Unterlage eingreift. Dies kann Holz sein, aber auch Gasbeton und bei Verwendung geeigneter Schrauben auch Beton.

Die Erfindung betrifft ebenfalls ein Verfahren zur Befestigung von Verschalungen, Platten- oder Rahmenkonstruktionen o. dgl. aus Holz oder Kunststoff mit Abstand vor einer Unterlage aus einem derartigen Material. Erfindungsgemäß wird die Konstruktion, also beispielsweise ein Fensterrahmen, an die Unterlage gehalten und in der gewünschten Stellung auf das gewünschte Maß gebracht. Anschließend wird zur Befestigung an so vielen Stellen, wie dies erforderlich ist, der Fensterrahmen oder die sonstige Konstruktion mit Hilfe der von der Erfindung vorgeschlagenen Schrauben befestigt. Hierzu ist es nur erforderlich, bei entsprechend kleinem Durchmesser der Schrauben diese mit einem Schraubendreher einzudrehen, bis ihr Kopf bündig in der Vorderseite bzw. Oberseite des Fensterrahmens eingedrungen ist. Dies ist selbst an Stellen möglich, wo dies vorher nicht beabsichtigt wurde. Insgesamt werden bei gleicher Schraubenanzahl die Kosten zur Befestigung des Rahmens niedriger, da die von der Erfindung vorgeschlagenen Schrauben einfacher aufgebaut sind.

Insbesondere ist es mit Vorteil möglich, zum ursprünglichen Einjustieren einer Plattenkonstruktion diese mit Hilfe der justierbaren Abstandsschrauben, beispielsweise nach DE-OS 35 40 413, zu justieren. Die Plattenkonstruktion wird also mit einer geringen Anzahl von derartigen Schrauben an die Unterlage angeschraubt, wobei die Schrauben so fest gezogen werden, daß ihr steigungsfreier Gewindeabschnitt in das Holz eingezogen wird. Anschließend wird die Plattenkonstruktion durch Linksdrehen der wenigen Schrauben auf das gewünschte Maß gebracht, d. h. in die gewünschte senkrechte oder bei Decken waagrechte Stellung. Anschließend werden in die Plattenkonstruktion zwischen die bereits vorhandenen Abstandsschrauben die von der Erfindung vorgeschlagenen Schrauben eingeschraubt. Dies hat den weiteren Vorteil, daß auch das Justieren vereinfacht wird, da beim Justieren nur eine wesentlich geringere Anzahl von Schrauben zu betätigen ist, als wenn der Rahmen an allen Stellen mit justierbaren Schrauben befestigt würde. Es verringert sich also auch der Arbeitsaufwand pro Befestigung einer Plattenkonstruktion, so daß die Gesamtkosten nochmals verringert werden können.

Weitere Merkmale, Einzelheiten und Vorzüge der Erfindung ergeben sich aus den Ansprüchen, der folgenden Beschreibung einer bevorzugten Ausführungsform der Erfindung sowie anhand der Zeichnung. Hier zeigen:

Fig. 1 eine Ansicht von der Erfindung vorgeschlagenen Schraube;

Fig. 2 eine Seitenansicht eines abgewandelten Schraubenkopfs;

Fig. 3 schematisch die Verwendung der Schraube zur Befestigung eines Rahmens.

Fig. 4 eine Längsansicht einer von der Erfindung vorgeschlagenen Schraube;

Fig. 5 einen teilweisen Querschnitt durch die Schraube;

Fig. 6 eine vergrößerte Darstellung der Fig. 5.


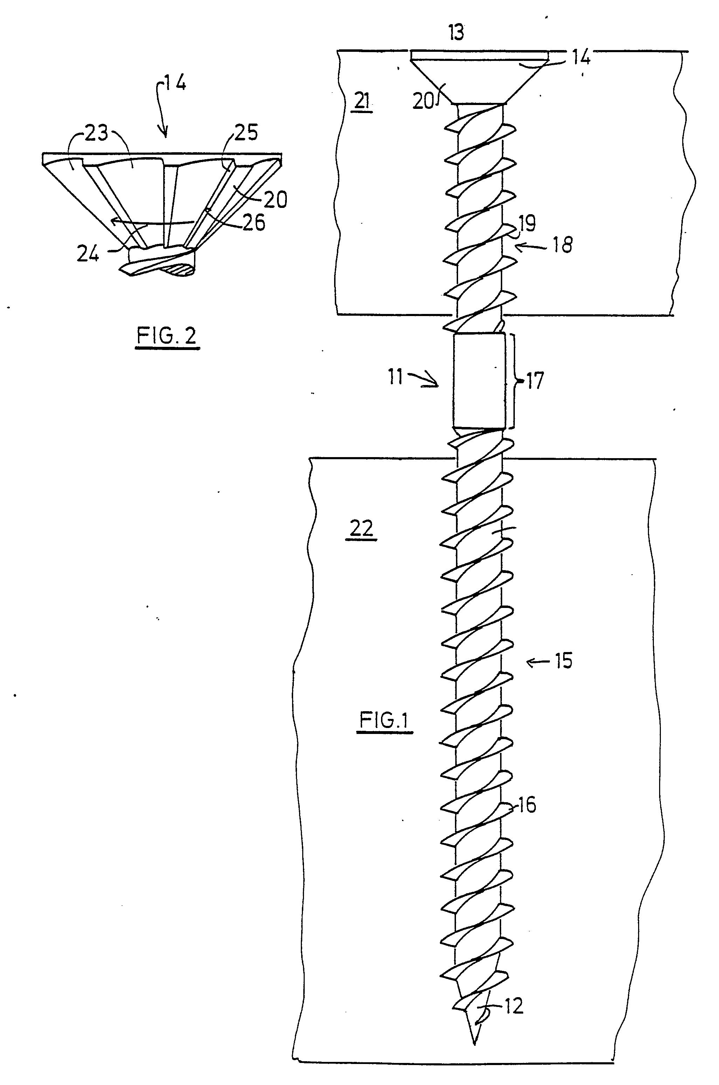

Die in Fig. 1 dargestellte Schraube enthält einen Schraubenschaft 11, dessen eines in Fig. 1 unteres Ende spitz zulaufend ausgebildet ist und die Schraubenspitze 12 bildet. Das gegenüberliegende Betätigungsende 13 dient dazu, an der Schraube angreifen zu können und sie in Holz oder Kunststoff einzudrehen. Im vorliegenden Beispiel weist das Betätigungsende 13 einen Schraubenkopf 14 auf, der als Senkkopf ausgebildet ist.

Die in der Figur von der Erfindung vorgeschlagene Schraube weist einen ersten Gewindeabschnitt 15 auf, der sich von der Schraubenspitze 12 bis etwa über zwei Drittel der Gesamtlänge des Schraubenschaftes 11 erstreckt. In diesem Gewindeabschnitt 15 ist die Schraube mit einem üblichen rechtsgängigen schraubenförmigen Gewinde 16 versehen. Mit Hilfe dieses Gewindes wird die Schraube in eine Unterlage, die aus Holz besteht, eingeschraubt.

An den ersten, der Schraubenspitze 12 zugeordneten Gewindeabschnitt 16 schließt sich ein zylindrischer Abschnitt 17 des Schraubenschaftes 11 an, der kein Gewinde aufweist. Dieser gewindefreie Abschnitt ist beim dargestellten Ausführungsbeispiel deutlich kürzer als der Gewindeabschnitt 16. In diesem Bereich ist der Schraubenschaft 11 ohne Gewinde und weist daher eine zylindrische Außenfläche mit einem überall gleichen Durchmesser auf. An diesen gewindefreien Abschnitt 17 schließt sich in Richtung auf den Schraubenkopf 14 ein zweiter Gewindeabschnitt 18 an, in dem der Schaft 11 mit einem Gewinde 19 versehen ist, das praktisch bis an die Unterseite 20 des Schraubenkopfes 14 heranreicht. Das Gewinde 16 des ersten Gewindeabschnittes 15 und das Gewinde 19 des zweiten Gewindeabschnittes 18 weisen sowohl gleiche Steigung als auch gleichen Außen- und gleichen Kerndurchmesser auf. Jedoch ist es nicht erforderlich, daß die Schraubenlinien des einen Gewindes 19 mit einer Verlängerung der Schraubenlinien des anderen Gewindes 16 übereinstimmen. Mit anderen Worten, es ist eine Phasenverschiebung zwischen den beiden Gewinden möglich und zulässig.

Wie sich aus der Figur ergibt, ist der Durchmesser des gewindefreien Abschnittes 18 etwas größer als der Kerndurchmesser der beiden Gewindeabschnitte 15, 18, jedoch deutlich kleiner als der Spitzendurchmesser beider Gewinde.

4

Links von der Schraube der Figur 1 ist in Figur 1 abgebrochen eine zu befestigende Rahmenkonstruktion 21 vor einer Unterlage 22 angedeutet. Bei der Rahmenkonstruktion 21 kann es sich beispielsweise um einen Fensterrahmen handeln. Die gegenseitige Anordnung des Rahmens und der Unterlage 22 zu der Schraube ist so gewählt, wie dies der vollständig eingeschraubten Schraube entsprechen würde. Der Gewindeabschnitt 15, der von der Schraubspitze 12 ausgeht, ist also der Unterlage 22 zugeordnet, während der im Bereich des Betätigungselementes 13 vorhandene Gewindeabschnitt 18 dem Rahmen 21 zugeordnet ist. Tritt ein Fall auf, wo der Rahmen mit größerem Abstand vor der Unterlage 22 befestigt werden soll, wird eine entsprechend längere Schraube verwendet. Bei dieser längeren Schraube ist jedoch der dem Schraubkopf 14 zugewandte Gewindeabschnitt 18 nicht länger, sondern weist die gleiche Länge auf. Diese Länge wird nur von der üblichen Dicke von Fensterrahmen bestimmt.

Fig. 2 zeigt vergrößert eine zweite Ausführungsform der Schraube, bei der die Unterseite 20 des Schraubenkopfes 14 mehrere etwa radial verlaufende Nuten 23 aufweist. Die Nuten 23 werden auf ihrer in Drehrichtung, die durch den Pfeil 24 dargestellt ist, hinteren Seite durch Flächen 25 begrenzt, die zusammen mit der Unterseite 20 des Schraubenkopfes 14 Schneidkanten 26 bilden. Diese Art der Ausbildung eines Schraubenkopfes ist zwar bekannt, jedoch ist diese Art der Unterseite des Schraubenkopfes in Zusammenhang mit den von der Erfindung vorgeschlagenen Schrauben besonders vorteilhaft.

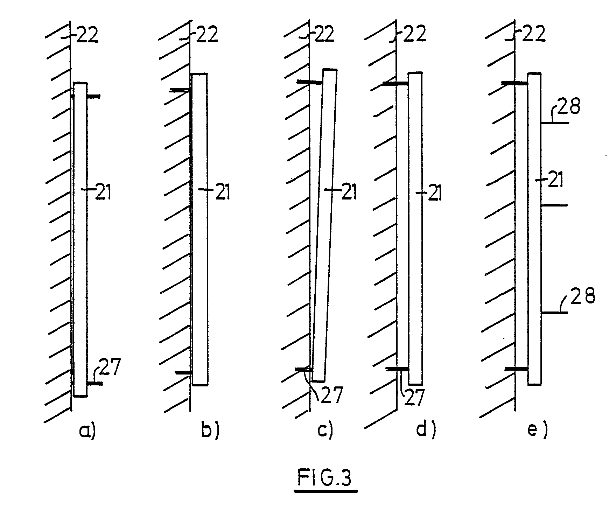

Fig. 3 zeigt in fünf Skizzen vereinfacht die Befestigung eines Rahmens 21 an einer aus Holz bestehenden Unterkonstruktion 22. Dabei ist aus Gründen der Vereinbarung nur ein einzelner Abschnitt des Rahmens 21 dargestellt. Der Rahmen wird, siehe Skizze a), an der richtigen Stelle gehalten und mit Hilfe von zwei justierbaren Abstandsschrauben 27 befestigt. Die justierbaren Abstandsschrauben 27 werden, ggf. nach Vorbohren, mit einem Schraubendreher festgezogen. Von ihnen wird der Rahmen 21 an die Unterlagen 22 angedrückt und bei Weiterdrehen werden die Hülsen oder Rippen am Schaft im Bereich des Kopfes der Abstandsschrauben in das Holz oder den Kunststoff des Rahmens 21 hineingezogen. Es entsteht die in Fig. 3 b) dargestellte Situation, in der die justierbaren Abstandsschrauben 27 in den Rahmen hineingezogen sind. Nun muß der Rahmen justiert werden. Zunächst wird die in Fig. 3 obere justierbare Abstandsschraube 27 entgegen dem Uhrzeigersinn gedreht, was, da ihr Kopf oder ihr Schaft im Kopfbereich an dem Rahmen festgehalten wird, dazu führt, daß der Rahmen 21 in seinem oberen Bereich sich von der Unterlage 22 entfernt, siehe Fig. 3 c). Anschließend wird die untere justierbare Abstandsschraube 27 entgegen dem Uhrzeigersinn gedreht, bis der Rahmen an der richtigen Stelle im Lot angeordnet ist, siehe Fig. 3 d).

Da die Gesamtlänge des Rahmens 21 jedoch zu groß ist, als daß die beiden Abstandsschrauben 27 ausreichen, muß der Raum zwischen ihnen noch gesichert werden, indem dort eine oder mehrere, im dargestellten Beispiel 3 Schrauben 28 nach der Erfindung eingeschraubt werden. Diese Situation ist in Fig. 3 e) dargestellt. Die Schrauben können sehr einfach, ggf. ohne Vorbohren, eingeschraubt werden, sie führen nicht mehr zu einer Ausbiegung des Rahmens nach irgendeiner Seite. Es lassen sich erfindungsgemäße Schrauben selbst an solchen Stellen einziehen, wo dies ursprünglich nicht beabsichtigt war, so daß die Vielseitigkeit des von der Erfindung vorgeschlagenen Systems der Justierung mit justierbaren und nicht justierbaren Abstandsschrauben nochmals vergrößert wird.

Im übrigen dürfte bei der Justierung, d. h. bei dem Vorgang von Fig. 3 b) nach Fig. 3 d), deutlich sichtbar sein, daß bei Verwendung von mehreren justierbaren Abstandsschrauben 27 das Justieren insgesamt wesentlich kompliziert würde, da in diesem Fall die weiteren justierbaren Abstandsschrauben jeweils schrittweise mitjustiert werden müßten. Anstelle der kombinierten Verwendung von justierbaren und nicht justierbaren Abstandsschrauben wäre es selbstverständlich auch möglich, den Rahmen 21 mit Hilfe anderer Mittel auf das in der Skizze 3 d) dargestellte gewünschte Maß zu bringen und dann ausschließlich mit Hilfe der von der Erfindung vorgeschlagenen nicht justierbaren Abstandsschrauben zu befestigen.

Bezeichnet man die gesamte Länge der Schraube mit L, die Länge des Gewindeabschnittes im Bereich des Schraubenkopfes 14 mit A und die axiale Länge des Gewindeabschnittes im Bereich der Schraubenspitze 12 mit B, so zeigt die folgende Tabelle an, daß man für alle vorkommenden Fälle mit einer relativ niedrigen Anzahl von Schrauben auskommt.

Tabelle

| L | A | B |
|-----|-----|-----|
| 92 | 50 | 40 |
| 132 | 50 | 50 |
| 160 | 50 | 70 |
| 70 | 25 | 40 |
| 80 | 25 | 40 |
| 100 | 25 | 50 |
| 120 | 25 | 50 |
| 140 | 25 | 70 |
| 160 | 25 | 70 |

Alle Längen sind in mm ausgedrückt. Der Durchmesser der Schraube, und zwar der Außendurchmesser des Gewindes, beträgt dabei vorzugsweise 6 mm, er kann jedoch auch im Bereich von 5 - 7, ggf. auch im Bereich von 4 - 8 mm liegen.

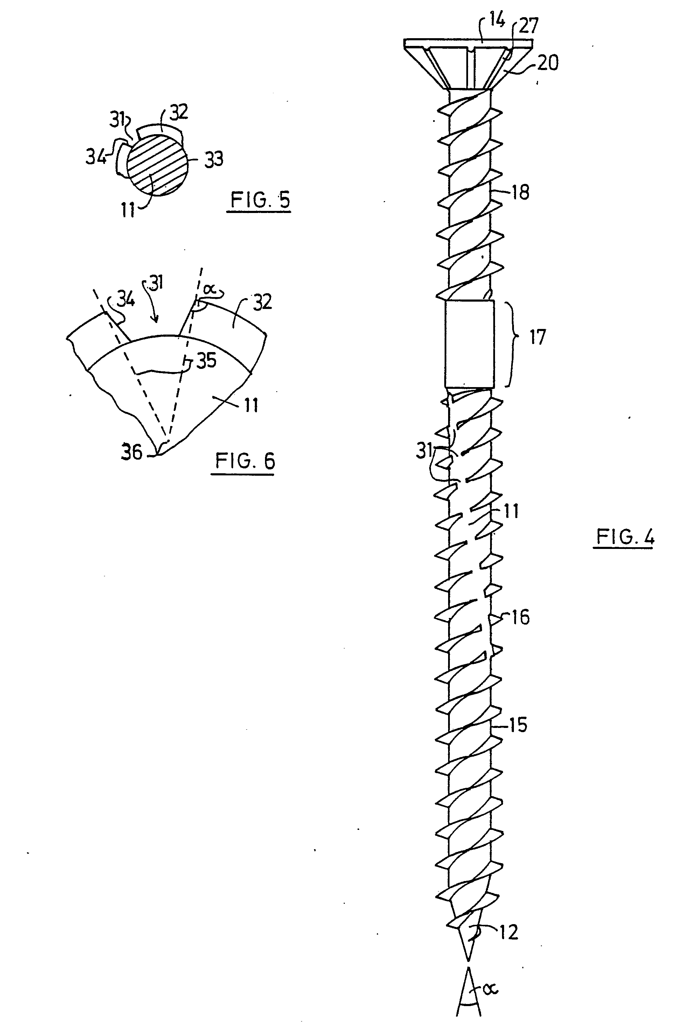

Die in Fig. 4 dargestellte Schraube ist für eine Unterlage, die aus einem relativ harten Material besteht, bestimmt.

Der von der Schraubenspitze 12 ausgehende Gewindeabschnitt 15 ist mit einer Reihe von Kerben 31 versehen. Jede Windung des Gewindes 16 weist eine derartige Kerbe 31 auf. Dabei ist die Kerbe 31 jedes Gewindegangs von der Kerbe 31 des jeweils benachbarten Gewindegangs leicht versetzt angeordnet, so daß die Kerben 31 insgesamt längs einer Linie verlaufen, die leicht von einer achsparalellen Geraden abweicht. Insgesamt bildet die die Kerben 31 verbindende Linie eine leichte Schraubenlinie, die im dargestellten Ausführungsbeispiel ein Linksgewinde bildet, während das Gewinde 16 beider Gewindeabschnitte 15, 18 ein Rechtsgewinde bildet. Die die Kerben 31 verbindende Linie erstreckt sich über die gesamte Länge des Gewindeabschnittes 15 und umfangsmäßig über einen Winkel von etwa 270°, also rund drei Viertel eines vollständigen Umfanges.

Die Art und Form der Kerbe 31 ergibt sich aus dem Querschnitt der Fig. 5. Es ist dabei zu sehen, daß die Kerbe 31 jede Windung 32 des Gewindes 16 bis auf den Kerndurchmesser 33 hin unterbricht. Dadurch bildet sich eine Kerbenbegrenzungsfläche 34, siehe auch Fig.6 , die vom Spitzendurchmesser des Gewindes 16 bis zum Kerndurchmesser des Gewindeabschnittes 15 reicht. Jede Kernbegrenzungsfläche 34 ist annähernd eben ausgebildet, so daß sich an der Schnittlinie zwischen der Windung 32 des Gewindes 16 und der Kerbenbegrenzungsfläche 34 eine deutlich ausgeprägte relatiy scharfkantige Schneidkante bildet.

Wie aus Fig. 5 und der vergrößerten Fig. 6 hervorgeht, erweitern sich die Kerben 31 nach außen hin.

In Fig. 6 ist für eine Kerbe 31 an beiden Seiten je ein Radius 35 gestrichelt eingezeichnet, der von der Längsachse 36 des Schraubenschaftes 11 ausgeht. Aus dem Vergleich zwischen den Kerbenbegrenzungsflächen 34 und den Radien 35 ist zu sehen, daß die Kerbe sich nach außen hin stärker erweitert als ein entsprechender Kreissektor. Dies bedeutet wiederum, daß an der Außenseite der Windungen 32 des Gewindes 16 ein Winkel $\alpha$ gebildet wird, der größer als 90° ist.

Der in Fig. 4 dargestellte Spitzenwinkel der Schraube beträgt vorzugsweise ca. 20 - 25°. Dies hat sich als ein besonders günstiger Wert herausgestellt.

## Ansprüche

1. Selbstbohrende Schraube mit einem ein Betätigungsende (13) und eine Schraubspitze (12) aufweisenden Schraubenschaft (11), der mindestens zwei Gewindeabschnitte (15, 18) aufweist, von denen der eine Gewindeabschnitt (15) von der Spitze (12) ausgeht, dadurch gekennzeichnet, daß der andere Gewindeabschnitt (18) bis an das Betätigungsende (13) der Schraube heranreicht und beide Gewindeabschnitte (15, 18) gleiche Steigung und gleichen Außendurchmesser aufweisen.

2. Schraube nach Anspruch 1, dadurch gekennzeichnet, daß das Betätigungsende (13) einen Schraubenkopf (14), vorzugsweise einen Senkkopf aufweist.

3. Schraube nach Anspruch 1 oder 2, dadurch gekennzeichnet, daß beide Gewindeabschnitte (15, 18) durch einen gewindefreien Abschnitt (17) voneinander getrennt sind.

4. Schraube nach einem der vorhergehenden Ansprüche, dadurch gekennzeichnet, daß beide Gewindeabschnitte (15, 18) gegeneinander phasenversetzt sind.

5. Schraube nach Anspruch 3 oder 4, dadurch gekennzeichnet, daß der gewindefreie Abschnitt (17) etwa zylindrisch ausgebildet ist und vorzugsweise mindestens etwa 2 mm lang ist.

6. Schraube nach einem der Ansprüche 3 - 5, dadurch gekennzeichnet, daß der Durchmesser des gwndefreien Abschnittes (17) größer als der Kerndurchmesser der Gewinde (16, 19) und vorzugsweise kleiner als der Spitzendurchmesser des Gewindes (16, 19) ist.

7. Schraube nach einem der vorhergehenden Ansprüche, dadurch gekennzeichnet, daß der dem Betätigungsende (13) zugeordnete Gewindeabschnitt (19) eine von der Gesamtschraubenlänge unabhängige axiale Länge aufweist, wobei insbesondere seine axiale Länge so gewählt ist, daß diese etwa der üblichen Dicke zu befestigender Konstruktionen entspricht.

8. Schraube nach einem der vorhergehenden Ansprüche, dadurch gekennzeichnet, daß bei Schrauben zur Befestigung von Fensterrahmen o. dgl. die axiale Länge des dem Betätigungsende (13) zugeordneten Gewindeabschnitts (19) etwa 50 mm beträgt und Schrauben zur Befestigung von Verschalungen o. dgl. die axiale Länge des dem Betätigungsende (13) zugeordneten Gewindeabschnitts (19) etwa 25 mm beträgt.

9. Schraube nach einem der vorhergehenden Ansprüche, dadurch gekennzeichnet, daß der der Schraubspitze (12) zugeordnete Gewindeabschnitt (15) und/oder der gewindelose Abschnitt (17) eine von der Länge der Schraube mindestens bereichsweise abhängige Länge aufweist.

10. Schraube nach einem der vorhergehenden Ansprüche, dadurch gekennzeichnet, daß im wesentlichen jede Windung (22) des von der Spitze (12) ausgehenden Gewindeabschnitts (15) eine Kerbe (31) aufweist.

11. Schraube nach Anspruch 10, dadurch gekennzeichnet, daß die Kerbe (31) bis auf den Kerndurchmesser des Gewindeschaftes (11) herabreicht.

12. Schraube nach einem der Ansprüche 10 oder 11, dadurch gekennzeichnet, daß die Kerben (31) auf einer Linie liegen, die von einer Geraden abweicht, insbesondere leicht schraubenlinienförmig verläuft und sich über einen Winkel von mehr als 180°, insbesondere von etwa 270°, erstreckt, wobei sie ein von dem Gewindesinn des Gewindeabschnitts (15) abweichendes Gewinde bildet.

13. Schraube nach einem der vorhergehenden Ansprüche, dadurch gekennzeichnet, daß die Seitenwände (34) der Kerben (31) eben sind, jede Kerbe (31) sich nach außen erweitert und die Seitenwände (34) der Kerben (31) stärker geneigt sind als es einem Radius (35) entspricht.

14. Schraube nach einem der vorhergehenden Ansprüche, dadurch gekennzeichnet, daß der Spitzenwinkel ($\alpha$) der Schraubenspitze (12) etwa 20 - 25° beträgt.

15. Verwendung einer Schraube nach einem der Ansprüche 1 - 4 als Schraube zur Abstandsmontage von Verschalungen, Plattenoder Rahmenkonstruktionen o. dgl. aus Holz oder aus Kunststoff mit Abstand vor einer Unterlage.

16. Verfahren zur Befestigung von Verschalungen, Platten- oder Rahmenkonstruktionen o. dgl. aus Holz oder aus Kunststoff mit Abstand vor einer Unterlage, dadurch gekennzeichnet, daß die Konstruktion vor die Unterlage gehalten, auf das gewünschte Maß gebracht und dann mit Schrauben (28) nach einem der Ansprüche 1 - 9 befestigt wird.

17. Verfahren nach Anspruch 11, dadurch gekennzeichnet, daß die zu befestigende Konstruktion dadurch auf das gewünschte Maß gebracht wird, daß sie mit einer zur geometrischen Festlegung ausreichenden Zahl von justierbaren Abstandsschrauben (27) an der Unterlage (22) festgeschraubt, und anschließend mit den justierbaren Abstandsschrauben (27) justiert wird.

18. Verfahren nach Anspruch 12, dadurch gekennzeichnet, daß die Schrauben (28) in den Zwischenräumen zwischen den justierbaren Abstandsschrauben (27) eingeschraubt werden.

FIG. 2

FIG.1

FIG.3

31  32

34       33

11

FIG. 5

34  31  α

35  32

11

36

FIG. 6

14  27

20

18

17

31

11

16

15

12

α

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 142 108  (SFS STADLER) <br> * Seite 6, Zeilen 2-40; Figur 32 * <br> --- | 1-3,5,6 ,9 | F 16 B  25/10 <br> E 06 B  1/60 <br> E 04 F  13/08 |
| X | AT-B-  380 732  (SFS STADLER) <br> * Seite 3, Zeile 19 - Seite 4, Zeile 12; Figur 8 * <br> --- | 1-3,5,6 ,9 | |
| A | EP-A-0 129 404  (ITW) <br> * Figur 2 * <br> --- | 1 | |
| A | FR-A-2 500 090  (JAEGER) <br> * Figuren 4,5 * <br> --- | 10-13 | |
| A | DE-A-1 960 604  (ITW) <br> --- | | |
| A | DE-A-3 005 166  (KNOCHE) <br> --- | | |
| D,A | DE-A-3 540 413  (WÜRTH) <br> --- | | |
| P,X | DE-U-8 804 654  (WÜRTH) <br> * Insgesamt * <br> ----- | 1-18 | |

**RECHERCHIERTE SACHGEBIETE (Int. Cl.4)**

E 04 F
E 06 B
F 16 B

Der vorliegende Recherchenbericht wurde für alle Patentansprüche erstellt

| Recherchenort | Abschlußdatum der Recherche | Prüfer |
|---|---|---|
| DEN HAAG | 09-03-1989 | VAN DER WAL W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

.............................................................
& : Mitglied der gleichen Patentfamilie, übereinstimmendes Dokument